# EUROPÄISCHE PATENTSCHRIFT

(11) **EP 2 535 849 B1**
(45) Veröffentlichungstag und Bekanntmachung des Hinweises auf die Patenterteilung: **26.09.2018**
(21) Anmeldenummer: 12171481.0
(22) Anmeldetag: 11.06.2012
(51) Int. Cl.: G06K 19/077, G06K 19/073

(54) **Transponderetikett und Herstellungsverfahren für ein Transponderetikett**
Étiquette de transpondeur et procédé de fabrication d'une étiquette de transpondeur
Transponder label and manufacturing method for same

(30) Priorität: 14.06.2011 DE 102011104170
(43) Veröffentlichungstag der Anmeldung: 19.12.2012
(73) Patentinhaber: Schreiner Group GmbH & Co. KG, 85764 Oberschleissheim (DE)
(72) Erfinder: Germann, Thomas, 83229 Aschau (DE); Hölzl, Gerhard, 85777 Fahrenzhausen (DE); Hufnagel, Volker, 82211 Herrsching (DE)
(74) Vertreter: Epping - Hermann - Fischer

(56) Entgegenhaltungen:
- EP-A1- 1 988 491
- DE-U1-202009 012 901
- US-A1- 2008 122 631
- US-A1- 2009 160 653

## Beschreibung

Die vorliegende Erfindung betrifft ein Transponderetikett und ein Herstellungsverfahren für ein Transponderetikett. Insbesondere betrifft die vorliegende Erfindung ein Transponderetikett zum Gebrauch auf einer metallischen Oberfläche sowie ein Verfahren, mit dem solche Transponderetiketten effizient hergestellt werden können.

Zur Steuerung von Warenströmen kommt einer geeigneten Kennzeichnung der einzelnen Waren eine immer größere Bedeutung zu. Da die Steuerung der Warenströme vermehrt halb- oder vollautomatisch erfolgt, ist es erforderlich, dass die einzelnen Waren auch beim Wareneingang oder beim Warenausgang automatisiert erfasst werden können. Nur so kann eine moderne Logistik oder Lagerverwaltung automatisiert und computergestützt realisiert werden.

Hierzu kommen unter anderem optische Kennzeichnungen in Form von eindimensionalen Barcodes oder zweidimensionalen Datamatrixcodes zum Einsatz. Diese können relativ schnell mittels eines optischen Lesegeräts erfasst und elektronisch weiterverarbeitet werden. Allerdings ist es erforderlich, dass sich die optische Kennzeichnung gut lesbar auf der Außenseite jedes einzelnen Warenelements befindet. Außerdem kann auf diese Weise nur jeweils ein Produkt nach dem anderen sequenziell erfasst werden. Dies führt gerade bei der hohen Stückzahl zu einer relativ großen Zeitdauer für die Erfassung.

Als Alternative zur Kennzeichnung von Waren für eine automatische Erfassung kommt in jüngster Zeit vermehrt so genannten RFID-Elementen (RFID = Radio Frequency IDentification) Aufmerksamkeit zu. Solche Elemente (Transponder) besitzen einen integrierten Halbleiterchip (IC), auf dem die elektronischen Informationen gespeichert werden können, sowie eine Antenne, über die die gespeicherten Informationen drahtlos an ein Lese- und Schreibgerät übertragen werden können.

Aufgrund der drahtlosen Übertragung zwischen Transponder und Lesegerät kann sich ein solches Kennzeichnungselement auch im Inneren eines Produkts befinden, oder das Produkt selbst kann mit einer blickdichten Verpackung umgeben sein. Außerdem bietet dieses Verfahren auch die Möglichkeit, eine sehr hohe Anzahl von Kennzeichnungen innerhalb kürzester Zeit zu erfassen.

Da für den Datenaustausch zwischen Transponder und Lesegerät elektromagnetische Wellen erforderlich sind, kann der Datenaustausch durch elektrisch leitfähige Bauteile negativ beeinträchtigt werden. Insbesondere wenn der Transponder auf einer Metallfläche aufgebracht werden muss, kann der Datenaustausch erschwert oder gar unmöglich gemacht werden.

Daher sind für Waren mit metallischen Bauteilen ganz besondere Transponderlösungen erforderlich. Beispielsweise kann das Transponderelement auf einen Papier- oder Kunststoffträger appliziert werden und der Träger kann dann als eine Art abstehende Fahne auf eine Metalloberfläche aufgeklebt werden ("FlagTag"). Solche abstehenden Fahnen können jedoch unter Umständen relativ leicht abgerissen oder beschädigt werden, was zu einem Verlust der Kennzeichnung führen würde.

Alternativ kann ein konventionelles Transponderetikett auf einen Abstandshalter, beispielsweise aus Kunststoff, appliziert werden. Der Verbund aus Abstandshalter und Transponderetikett wird dann auf die Metalloberfläche aufgeklebt. Solche Lösungen bringen jedoch in der Praxis oft nur relativ unbefriedigende Lesereichweiten und nehmen vergleichsweise viel Platz ein.

Eine weitere Möglichkeit sind Transponderelemente, die mit einem elektrisch nicht leitenden Material vollständig ummantelt sind ("Hard-Tag"). Ein solcher Mantel dient dabei einerseits als Abstandshalter zwischen Metalloberfläche der Ware und RFID-Transponder und andererseits als Schutz gegen mechanische Beanspruchung. Allerdings sind solche Lösungen auch sehr teuer und daher für Anwendungen in großen Stückzahlen ungeeignet.

US 2009/160653 A1 beschreibt ein Transponderetikett gemäß dem Oberbegriff des Anspruchs 1. Das in US 2009/160653 A1 beschriebene Transponderetikett weist unter anderem ein dielektrisches Element auf, das beispielsweise aus Schaumstoff bestehen kann.

Ein weiteres Transponderetikett mit einem dielektrischen Element geht aus US 2008/122631 A1 hervor; es dient insbesondere zum Aufbringen auf metallischen Gegenständen.

EP 1 988 491 A1 beschreibt ein Transponderetikett mit einem dielektrischen Element, das aus geschäumtem Harz, beispielsweise aus Polyethylenterephthalat bzw. PET oder alternativ aus einer Mehrschichtstruktur bestehen kann.

DE 20 2009 012901 U1 beschreibt ein zum Aufbringen auf einen metallischen Untergrund bestimmtes Transponderetikett, bei dem der Transponder auf nur einer Seite des dielektrischen Elements ausgebildet ist.

Schutzmaßnahmen gegen unbefugte Manipulationen sind bei den oben genannten Transponderetiketten nicht vorgesehen.

Es ist die Aufgabe der vorliegenden Erfindung, ein kostengünstig produzierbares und auf metallischen Gegenständen sehr gute Sende- und Empfangseigenschaften aufweisendes Transponderetikett bereitzustellen, das im Falle eines Ablöseversuchs einen erhöhten Manipulationsschutz bietet. Es ist ferner die Aufgabe der Erfindung, ein Herstellungsverfahren zum Herstellen mindestens eines solchen Transponderetiketts bereitzustellen.

Diese Aufgabe wird durch ein Transponderetikett gemäß Anspruch 1 sowie durch ein Verfahren gemäß Anspruch 10 gelöst.
Das Transponderetikett gemäß Anspruch 1 umfasst ein dielektrisches Schaumstoffelement mit einer Oberseite und einer Unterseite, ein Transponderinlay mit einem Chip und einer Streifenleiterantenne sowie eine Klebstoffbeschichtung, um das Transponderetikett an der Unterseite auf eine Unterlage aufkleben zu können. Das Transponderinlay ist durch einen Klebstoff derart auf das Schaumstoffelement aufgebracht, dass sich ein erster Teil der Streifenleiterantenne auf der Oberseite des Schaumstoffelements befindet und sich ein zweiter Teil der Streifenleiterantenne auf der Unterseite des Schaumstoffelements befindet. Die Streifenleiterantenne weist auf der Unterseite des Schaumstoffelements Einstanzungen derart auf, dass die Streifenleiterantenne bei einem Ablöseversuch des aufgeklebten Transponderetiketts abreißt.

Das Herstellungsverfahren gemäß Anspruch 10 umfasst die folgenden Schritte:
- Bereitstellen einer dielektrischen Schaumstoffbahn mit einer Oberseite und einer Unterseite,
- Bereitstellen eines Transponderinlays, umfassend einen Chip und eine Streifenleiterantenne,
- Aufbringen des Transponderinlays auf die Schaumstoffbahn derart, dass sich ein erster Teil der Streifenleiterantenne auf der Oberseite der Schaumstoffbahn befindet,
- Umklappen des Transponderinlays um die Schaumstoffbahn derart, dass ein zweiter Teil der Streifenleiterantenne auf der Unterseite der Schaumstoffbahn zu liegen kommt,
- Verbinden der Streifenleiterantenne mit der Schaumstoffbahn durch einen Klebstoff,
- Versehen der Streifenleiterantenne mit Einstanzungen und
- Aufbringen eines Klebstoffs auf die Unterseite der Schaumstoffbahn und den zweiten Teil der Streifenleiterantenne.

Es ist ein Ansatz der vorliegenden Erfindung, ein konventionelles Transponderinlay um einen Schaumstoffträger herum anzubringen, wobei der Schaumstoffträger sehr einfach als Materialbahn von einer Rolle bereitgestellt werden kann, auf die das konventionelle Transponderinlay aufgebracht und herumgeklappt wird. Nach Applikation eines Haftklebstoffs und Abdecken des Haftklebstoffs mit einem Liner (Schutzfolie) können die so hergestellten Transponderetiketten entweder unmittelbar vereinzelt werden, oder die komplette Materialbahn kann erneut auf eine Rolle aufgewickelt werden.

Das Bereitstellen von Schaumstoff und Liner von einer Rolle und die Verwendung von konventionellen Transponderetiketten mit Antenne ermöglichen dabei eine sehr effiziente und damit kostengünstige Herstellung der erfindungsgemäßen Transponderetiketten. Somit können die Produktionskosten gegenüber Alternativprodukten deutlich gesenkt werden.

Durch die um den Schaumstoff herumgeklappte Antenne wird eine Streifenleiterantenne gebildet. Dabei dient der Schaumstoff als Dielektrikum. Auf der Oberseite und der Unterseite des Schaumstoffs ist jeweils ein Teil der Antenne angeordnet. Somit wird ein Streifenleiter gebildet, der bei geeigneten Abmessungen einen dielektrischen Resonator ausbildet. Die Abmessung der Antenne steht dabei in Relation zur verwendeten Frequenz des Systems. Insbesondere handelt es sich bei der Antenne um eine in Lambda/4-Ausführung Streifenleiterantenne.

Vorzugsweise besitzt das Schaumstoffelement eine Dicke von maximal 1,5 Millimeter. Hierdurch können ganz besonders dünne Transponderetiketten hergestellt werden, die dennoch eine ausgezeichnete Lesereichweite auf elektrisch leitenden Untergründen besitzen.

In einer bevorzugten Ausführungsform umfasst das Transponderetikett ferner ein erstes Folienelement, das mindestens einen Teilbereich des Transponderinlays überdeckt. Besonders bevorzugt umfasst das Transponderetikett ein zweites Folienelement, das mindestens einen Teilbereich des ersten Folienelements bedeckt. Diese Folienelemente bieten gute Möglichkeiten zur visuellen Kennzeichnung des Transponderetiketts und stellen auch einen Schutz gegen Verschmutzung und eventuelle Beschädigungen dar.

In einer speziellen Ausführungsform umfasst das Transponderetikett eine Klebstoffbeschichtung, die mindestens einen Teilbereich der Unterseite des Schaumstoffelements und des zweiten Teils der Antenne bedeckt. Somit kann das Etikett auf einfache Weise auf ein zu kennzeichnendes Produkt aufgeklebt werden. Vorzugsweise umfasst ein solches Transponderetikett ferner eine Klebstoffabdeckung, die die Klebstoffbeschichtung auf der Unterseite des Schaumstoffelements und dem zweiten Teil der Antenne bedeckt. Besonders vorteilhaft ist hierbei eine Klebstoffabdeckung aus einer Folienbahn.

Das erfindungsgemäße Herstellungsverfahren umfasst vorzugsweise einen Schritt zum Aufbringen eines ersten Folienelements auf mindestens einen Teilbereich des Transponderinlays. Besonders bevorzugt umfasst das Verfahren ferner einen Schritt zum Aufbringen eines weiteren Folienelements auf die Oberseite des ersten Folienelements mit dem ersten Teil der Antenne.

In einer besonderen Ausführungsvariante umfasst das Verfahren ferner einen Schritt zum Aufbringen einer Schutzfolie auf die Unterseite der Schaumstoffbahn und den zweiten Teil der Antenne.

Vorzugsweise umfasst das Herstellungsverfahren ferner einen Schritt zum Ausstanzen einzelner Transponderetiketten aus der Schaumstoffbahn mit mehreren aufgebrachten und umgeklappten Transponderinlays.

Alternativ umfasst das Verfahren in einer speziellen Ausführungsform ferner einen Schritt zum Aufwickeln einer Materialbahn aus der Schaumstoffbahn mit mehreren aufgebrachten und umgeklappten Transponderinlays.

Nachfolgend wird die Erfindung anhand von Ausführungsbeispielen unter Verwendung der beigefügten Figuren erläutert. Dabei zeigen:
Figur 1: einen schematischen Querschnitt durch ein erfindungsgemäßes Transponderetikett;
Figuren 2a bis 2c: schematische Querschnitte durch erfindungsgemäße Transponderetiketten mit unterschiedlichen Oberlaminatvarianten;
Figur 3: eine schematische Darstellung eines Herstellungsprozesses für ein erfindungsgemäßes Transponderetikett; und
Figur 4: eine schematische Darstellung eines Verarbeitungsschrittes für die Herstellung eines erfindungsgemäßen Transponderetiketts.

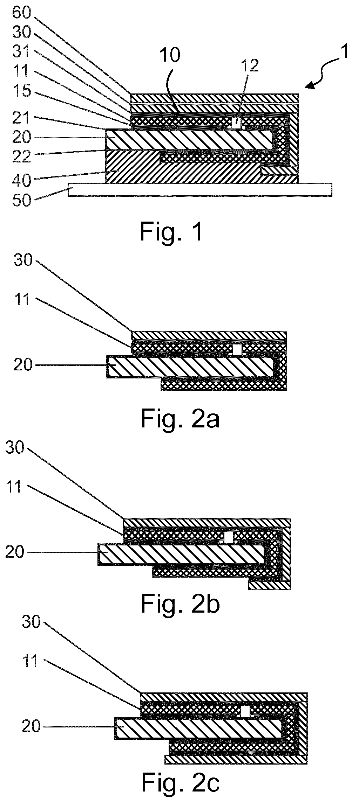

Figur 1 zeigt einen Querschnitt durch ein erfindungsgemäßes Transponder-Etikett 1. In der Mitte des Etiketts 1 ist ein Schaumstoff 20 aus einem elektrisch isolierenden, dielektrischen Material angeordnet. Dieser Schaumstoff 20 hat üblicherweise eine Materialdicke von 2 mm oder weniger. Vorzugsweise besitzt der Schaumstoff 20 eine Dicke von maximal 1,5 mm, besonders bevorzugt eine Dicke von maximal 1,2 mm. Eine Ausführungsform eines Schaumstoffs umfasst ein Polymermaterial, in dem eine Zellenstruktur ausgebildet ist. Die Zellen können offene oder geschlossene Zellen sein. Der Schaumstoff ist daher kompressibel.

Um den Schaumstoff 20 herum, d.h. auf der Oberseite, der Unterseite und einer Seitenkante des Schaumstoffs 20, ist ein Transponderinlay 10 angebracht. Dieses Transponderinlay 10 umfasst mindestens eine Antenne 11 und einen Chip 12.

Das Transponderinlay 10 ist dabei so auf dem Schaumstoff 20 angebracht, dass sich der Chip 12 auf der Oberseite 21 des Schaumstoffs 20 befindet. Unter der Oberseite 21 versteht man dabei die Seite des Schaumstoffs 20, die bei einer Applikation des vollständigen Etiketts auf einer Metalloberfläche von der Metalloberfläche abgewandt ist. Dementsprechend wird die Seite des Schaumstoffs 20, die bei der Applikation des Etiketts der Metalloberfläche zugewandt ist, als Unterseite 22 bezeichnet.

Das Transponderinlay 10 wird dabei bevorzugt so auf dem Schaumstoff 20 aufgebracht, dass der Chip 12 vom Transponder 10 aus gesehen zum Schaumstoff 20 zeigt. Somit ist der Chip 12 durch den Schaumstoff 20 besonders gut vor Beschädigungen geschützt. Alternativ kann das Transponderinlay 10 auch so aufgebracht werden, dass der Chip 12 nach außen zeigt. Somit kann eine noch bessere Performance (Lesereichweite) erzielt werden.

Ein Teil der Antenne 11 des Transponderinlays 10 ist auf der Oberseite 21 des Schaumstoffs 20 angebracht. Ein anderer Teil der Antenne 11 wird um den Schaumstoff 20 herum geschlagen und kommt auf der Unterseite 22 des Schaumstoffs zu liegen.

Im applizierten Zustand verlaufen die beiden Teile der Antenne 11 auf der Oberseite 21 und der Unterseite 22 des Schaumstoffs 20 parallel zueinander. Zwischen den beiden Teilen der Antenne ist der Chip 12 angeordnet. Durch diese Anordnung wird beispielsweise eine Streifenantenne gebildet. Bei einer solchen Streifenantenne handelt es sich um einen dielektrischen Resonator, der aus den beiden elektrisch leitfähigen Antennenteilen 11 und dem dazwischen angeordneten Schaumstoff 20 als Dielektrikum ausgebildet ist.

Die Ausdehnung der Antennenfläche in eine Richtung parallel zur Oberseite 21 und Unterseite 22 des Schaumstoffs 20 beträgt dabei etwa ein Viertel der Wellenlänge der Betriebsfrequenz. Dieser Antennentyp wird auch mit Lambda/4-Antenne bezeichnet.

Die Streifenleiterantenne 11 ist dabei mit dem Schaumstoff 20 durch einen Klebstoff verbunden. Vorzugsweise ist der Klebstoff dabei bereits zuvor auf den Schaumstoff 20 aufgebracht worden. Man erhält somit einen selbstklebenden Schaumstoff 20. Dieser selbstklebende Schaumstoff 20 wird dann auf ein nichtklebendes Transponderinlay 10 aufgebracht. Alternativ wäre es jedoch auch möglich, den Klebstoff auf das Transponderinlay 10 aufzubringen und anschließend das selbstklebende Transponderinlay 10 auf einen nichtklebenden Schaumstoff 20 aufzubringen.

Zum Schutz des Transponderinlays 10 und insbesondere des Chips 12 wird zumindest über einen Teil des Transponderinlays 10, der sich auf der Oberseite des Schaumstoffs 20 befindet, ein Schutzlaminat 30 aufgebracht. Bei diesem Schutzlaminat 30 kann es sich beispielsweise um eine aufgeklebte transparente Folie handeln. Dabei kann das Schutzlaminat 30 entweder zuvor mit einem Klebstoff versehen werden, oder wird in einem separaten Schritt aufgetragen und anschließend ein nichtklebendes Laminat appliziert.

Eine Alternative, bei der das Schutzlaminat nur auf die Oberseite des Transponderetiketts aufgebracht ist, ist in Figur 2a dargestellt. Das Schutzlaminat 30 kann sich auch noch weiter über eine Seite des Schaumstoffs 20 und einen Teil der Unterseite 22 erstrecken, wie dies beispielsweise in Figur 2b dargestellt ist. Alternativ kann, wie in Figur 2c gezeigt, das Schutzlaminat 30 vollflächig die Unterseite 22 bedecken.

Zur Befestigung des so entstandenen Transponderetiketts 1 auf einem vorzugsweise metallischen Untergrund wird die Unterseite des Etiketts 1 mit einem Klebstoff 40 versehen. Dieser Klebstoff erstreckt sich sowohl über die freien Bereiche der Unterseite 21 des Schaumstoffs 20 als auch über den auf der Unterseite befindlichen Bereich der Streifenleiterantenne 11 und gegebenenfalls über den auf der Unterseite befindlichen Teil des Schutzlaminats 30.

In der Regel wird dieser Klebstoff 40 keine elektrisch leitenden Eigenschaften besitzen, so dass zwischen Streifenleiterantenne 11 und einem metallischen, elektrisch leitfähigen Untergrund eine galvanische Trennung besteht. In diesem Fall erfolgt eine kapazitive Kopplung zwischen Streifenleiterantenne 11 und dem metallischen Untergrund.

Alternativ wäre es auch möglich, einen elektrisch leitfähigen Klebstoff 40 zu verwenden, so dass die Streifenleiterantenne 11 und der metallische Untergrund elektrisch leitfähig miteinander verbunden sind. Somit könnten diese Sende- und Empfangseigenschaften des Transponderetiketts 1 zusätzlich verbessert werden.

Zum Schutz des Klebstoffes 40 wird der Klebstoff 40 mit einer Abdeckbahn 50, einem so genannten Liner, überdeckt. Der Liner 50 kann dabei aus einer langgezogenen, streifenförmigen Bahn bestehen, auf der sich mehrere Transponderetiketten 1 nebeneinander angeordnet befinden. Der Liner 50 kann entweder aus einer Kunststofffolie, oder aber auch aus einer Papierbahn bestehen, auf die bei Bedarf eine klebstoffabweisende Substanz aufgebracht ist.

Für einen erhöhten Manipulationsschutz kann die Antenne 11 auf der Unterseite des Etiketts mit geeigneten Einstanzungen, beispielsweise in Form einer Perforation, versehen werden. Wenn dann zur Verbindung des Etiketts mit dem Untergrund ein stark haftender Klebstoff 40 verwendet wird, so reißt bei einem Ablöseversuch eines aufgeklebten Etiketts die Streifenleiterantenne 11 entlang der Einstanzungen ab und der Antennenaufbau wird verstimmt.

Dabei ist es möglich, dass die Antenne 11 so stark verstimmt wird, dass ein weiteres Auslesen des Transponderetiketts vollständig unmöglich gemacht wird und hierdurch das Etikett funktionsunfähig wird. Es ist alternativ aber auch möglich, dass die Einstanzungen so angebracht werden, dass die Antenne nur geringfügig verstimmt wird und damit ein weiteres Auslesen des Transponders mit signifikant veränderter, vorzugsweise eingeschränkter, Lesereichweite möglich ist. Somit kann ein Manipulationsversuch zuverlässig erkannt werden, ohne dass die gespeicherten Daten unwiederbringlich verloren sind.

Zur optischen Kennzeichnung des Transponderetiketts 1 kann das Schutzlaminat 30 mit einem Aufdruck versehen werden. Dabei ist sowohl ein einheitlicher Aufdruck für eine komplette Charge von Transponderetiketten möglich als auch eine individuelle Kennzeichnung für jedes einzelne Transponderetikett. Soll die Kennzeichnung eines Etiketts im Druckverfahren erfolgen, so sind hierfür besonders opake Folien oder transparente Folie mit einer opaken Grundierung geeignet, um einen guten Kontrast mit dem Aufdruck zu erhalten.

Um den Aufdruck der Kennzeichnung vor Verunreinigungen oder Beschädigungen zu schützen, ist es möglich, ein zusätzliches, weiteres transparentes Schutzlaminat 60 über dem Aufdruck anzubringen.

Zur Kennzeichnung der Transponderetiketten kann in diesem speziellen Aufbau auch eine mittels Laser nachträglich beschriftbare Folie auf der Oberseite des Transponderetiketts 1 angebracht werden. Dabei handelt es sich um einen Folienaufbau, bei dem durch die Bestrahlung mit Laserlicht ein Farbumschlag oder eine andere optische Veränderung hervorgerufen werden kann.

Solche laserbeschriftbaren Folien besitzen in der Regel einen hohen Anteil an metallischen Partikeln. Die elektrische Leitfähigkeit dieser metallischen Partikeln führt bei konventionellen Transponderetiketten zu einer stark eingeschränkten Lesereichweite und macht in der Regel ein Auslesen oder Beschreiben nahezu unmöglich. Bei dem besonderen Aufbau der erfindungsgemäßen Transponderetiketten dagegen ist eine signifikante Verbesserung dieser Leserreichweite zu beobachten. Hierdurch wird es erst möglich, einen laserbeschriftbaren Folienaufbau mit einem Transponderetikett zu kombinieren.

Die laserbeschriftbare Kennzeichnungsfolie kann dabei oberhalb des Schutzlaminats 30 aufgebracht werden. Alternativ kann auch zunächst eine laserbeschriftbare Kennzeichnungsfolie direkt auf die Antenne 11 aufgebracht werden und anschließende über den gemeinsamen Aufbau ein transparentes Schutzlaminat 30 aufgebracht werden. Ferner ist es auch möglich, dass die laserbeschriftbare Kennzeichnungsfolie gleichzeitig als Schutzlaminat dient.

Man erhält durch die Kombination eines oben beschriebenen Transponderetiketts mit einer durch Laser beschriftbaren Kennzeichnungsfolie ein Transponderetikett, das auch zu einem späteren Zeitpunkt individuell beschriftbar ist und dennoch eine gute Lesereichweite besitzt, insbesondere bei Applikation des Transponderetiketts auf metallischem Untergrund.

Aufgrund dieser besonderen Eigenschaften ist es ebenso möglich, für die Kennzeichnung des Transponderetiketts Materialien mit einem Metallanteil zu verwenden, was ansonsten bei Transponderetiketten nicht möglich war. Insbesondere können zum Beispiel auch sogenannte Hologrammfolien verwendet werden. Diese Folien werden sehr häufig zum Fälschungsschutz und Originalitätsnachweise eingesetzt. Da für das Hologramm üblicherweise eine metallische Folie erforderlich ist, war es bisher nicht möglich, solche Hologrammfolien mit Transponderetiketten auf engstem Raum und in einem solch flachen Aufbau zu kombinieren.

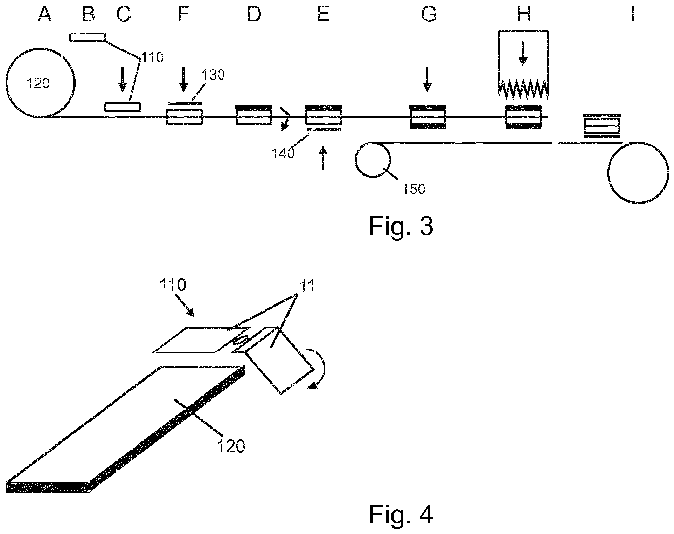

Figur 3 zeigt einen beispielhaften Produktionsprozess für ein erfindungsgemäßes Transponderetikett 1. Zunächst wird eine geeignete Schaumstoffbahn 120 bereitgestellt. Vorzugsweise wird in Schritt A die Schaumstoffbahn 120 als Rollenware bereitgestellt und zur Produktion die Schaumstoffbahn 120 von dieser Rolle abgerollt.

Als nächstes wird in Schritt B ein geeignetes Transponderinlay 110 bereitgestellt. Wie bereits oben erwähnt, kann dieses Transponderinlay 110 zuvor mit einem Klebstoff 15 versehen sein. Wenn das Transponderinlay 110 dagegen nicht klebend ist, so muss zunächst auf das Transponderinlay 110 oder auf Teile der Schaumstoffbahn 120 ein geeigneter Klebstoff aufgebracht werden.

Anschließend wird in Schritt C das Transponderinlay 110 so auf die Schaumstoffbahn 120 aufgebracht, dass ein Teil der Antenne 11 und der Chip 12 des Transponderinlays 110 auf der Oberseite der Schaumstoffbahn 120 zu liegen kommt.

Wenn das Transponderetikett 1 eine optische Kennzeichnung erhalten soll, so kann auf einen Teilbereich des Transponderinlays 110 ein geeignetes Kennzeichnungselement auflaminiert werden (bei Schritt F, in Fig. 3 nicht dargestellt). Hierzu kann es sich beispielsweise um ein bedrucktes Folienelement handeln oder auch um ein oben bereits beschriebenes mittels Laser beschriftbares Folienelement. Alternative Kennzeichnungselemente können in gleicher Weise aufgebracht werden.

Zum Schutz des Transponderetiketts kann in einem weiteren Schritt ein vorzugsweise transparentes Schutzlaminat 130 auf das Transponderinlay 110 und gegebenenfalls auch das oben beschriebene Kennzeichnungselement aufgebracht werden. Vorzugsweise handelt es sich hierbei um eine transparente Stofffolie, die mittels Klebstoff mit dem Transponderetikett verbunden wird.

In einem nächsten Schritt D wird der verbleibende Teil der Antenne 11, der über die Schaumstoffbahn 120 hinausragt, um die Schaumstoffbahn 120 herum geklappt, so dass dieser verbleibende Teil der Antenne 11 auf der Unterseite der Schaumstoffbahn zu liegen kommt und somit eine Streifenleiterantenne bildet. Das Umklappen des Transponderinlays um die Schaumstoffbahn ist in Figur 4 detailliert dargestellt.

Anschließend wird in Schritt E auf die Unterseite der Schaumstoffbahn 120 mit einem Teil der Antenne 11 und eventuell auch einem Teil des Schutzlaminats 130 ein Klebstoff 140, vorzugsweise ein Haftklebstoff, aufgetragen. Dieser Auftrag kann entweder vollflächig erfolgen, oder der Klebstoff 140 wird nur in vordefinierten Bereichen der Unterseite aufgebracht. Beispielsweise kann der Klebstoffauftrag auch in einem Druckverfahren aufgetragen werden.

Zum Schutz des Klebstoffes 140 wird dieser Klebstoff 140 in einem weiteren Schritt G nach dem Auftragen mit einem Liner 150 abgedeckt. Hierzu wird dieser Liner 150 als Folienbahn, vorzugsweise auf einer Rolle aufgewickelt, bereitgestellt. Dieser Liner 150 wird mit der mit Klebstoff versehenen Unterseite der Schaumstoffbahn 120 zusammengeführt.

Der Klebstoffauftrag E und das Aufbringen G des Liners 150 können dabei auch in einem gemeinsamen Arbeitsgang erfolgen.

In einem weiteren Schritt H wird daraufhin aus der Schaumstoffbahn 120 mit dem Transponderinlay 110 ein einzelnes Transponderetikett 1 ausgestanzt. Dabei kann die Stanze, welche das einzelne Transponderetikett ausstanzt, den Schaumstoff 120 und auch den Liner 150 vollständig durchstanzen, so dass ein unmittelbarer einzelnes Transponderetikett 1 entsteht.

Alternativ kann die Stanze jedoch auch nur durch den Schaumstoff 120 hindurch dringen und den Liner 150 dabei unbeschädigt belassen. Somit erhält man eine kontinuierliche Folienbahn des Liners 150, auf der sich das heraus gestanzte Transponderetikett 1 befindet. Der nicht benötigte Teil der Schaumstoffbahn 120 kann daraufhin entfernt werden, was man als Entgittern bezeichnet.

Durch die hintereinander folgende Produktion mehrerer solcher Transponderetiketten 1 erhält man somit eine Folienbahn des Liners 150, auf der sich eine Mehrzahl von Transponderetiketten 1 hintereinander befinden. In einem weiteren Schritt I kann diese Folienbahn mit den Transponderetiketten 1 aufgerollt werden und somit als Rollenware für die Weiterverarbeitung komfortabel bereitgestellt werden.

Zusammenfassend betrifft die vorliegende Erfindung ein Transponderetikett für einen metallischen Untergrund. Das Transponderetikett ist dabei dennoch relativ dünn und auch flexibel. Die Erfindung betrifft ferner ein kostengünstiges Rolle-zu-Rolle-Herstellungsverfahren für solche Transponderetiketten.

## Patentansprüche

1. Transponderetikett (1), umfassend
ein dielektrisches Schaumstoffelement (20) mit einer Oberseite (21) und einer Unterseite (22);
ein Transponderinlay (10) mit einem Chip (12) und einer Streifenleiterantenne (11);
eine Klebstoffbeschichtung (40), um das Transponderetikett (1) an der Unterseite auf eine Unterlage aufkleben zu können,
wobei das Transponderinlay (10) durch einen Klebstoff (15) derart auf das Schaumstoffelement (20) aufgebracht ist, dass sich ein erster Teil der Streifenleiterantenne (11) auf der Oberseite (21) des Schaumstoffelements (20) befindet und sich ein zweiter Teil der Streifenleiterantenne (11) auf der Unterseite (22) des Schaumstoffelements (20) befindet,
**dadurch gekennzeichnet, dass** die Streifenleiterantenne (11) auf der Unterseite (22) des Schaumstoffelements (20) Einstanzungen derart aufweist, dass die Streifenleiterantenne (11) bei einem Ablöseversuch des aufgeklebten Transponderetiketts (1) abreißt.

2. Transponderetikett nach Anspruch 1, wobei die Einstanzungen eine Perforation sind.

3. Transponderetikett nach Anspruch 1 oder 2, wobei das Schaumstoffelement (20) eine Dicke von maximal 1,5 Millimetern besitzt.

4. Transponderetikett nach einem der Ansprüche 1 bis 3, ferner umfassend ein erstes Folienelement (30), das mindestens einen Teilbereich des Transponderinlays (10) überdeckt.

5. Transponderetikett nach Anspruch 4, ferner umfassend ein zweites Folienelement (60), das mindestens einen Teilbereich des ersten Folienelements (30) bedeckt.

6. Transponderetikett nach Anspruch 5, wobei das erste (30) oder das zweite (60) Folienelement ein mit einem Laser beschriftbares Folienelement ist.

7. Transponderetikett nach einem der Ansprüche 1 bis 6, wobei die Klebstoffbeschichtung (40) mindestens einen Teilbereich der Unterseite (22) des Schaumstoffelements (20) und des zweiten Teils der Streifenleiterantenne (11) bedeckt.

8. Transponderetikett nach Anspruch 4, wobei das erste Folienelement (30) die Streifenleiterantenne (11) auf der Unterseite (22) des Schaumstoffelements (20) vollständig bedeckt und wobei ein Bereich des ersten Folienelements (30), der auf der Unterseite (22) zu liegen kommt, vollflächig mit einer Klebstoffbeschichtung (40) versehen ist.

9. Transponderetikett nach einem der Ansprüche 1 bis 8, ferner umfassend eine Klebstoffabdeckung (50), die die Klebstoffbeschichtung (40) auf der Unterseite (22) des Schaumstoffelements (20) und den zweiten Teil der Streifenleiterantenne (11) bedeckt.

10. Herstellungsverfahren für mindestens ein Transponderetikett (1), umfassend:
- Bereitstellen einer dielektrischen Schaumstoffbahn (120) mit einer Oberseite und einer Unterseite,
- Bereitstellen eines Transponderinlays (10), umfassend einen Chip (12) und eine Streifenleiterantenne (11),
- Aufbringen des Transponderinlays (10) auf die Schaumstoffbahn (120) derart, dass sich ein erster Teil der Streifenleiterantenne (11) auf der Oberseite der Schaumstoffbahn (120) befindet,
- Umklappen des Transponderinlays (10) um die Schaumstoffbahn (120) derart, dass ein zweiter Teil der Streifenleiterantenne (11) auf der Unterseite der Schaumstoffbahn (120) zu liegen kommt,
- Verbinden der Streifenleiterantenne (11) mit der Schaumstoffbahn (120) durch einen Klebstoff,
- Versehen der Streifenleiterantenne (11) mit Einstanzungen und
- Aufbringen eines Klebstoffs auf die Unterseite der Schaumstoffbahn (120) und den zweiten Teil der Streifenleiterantenne (11).

11. Herstellungsverfahren nach Anspruch 10, das ferner einen Schritt zum Aufbringen eines ersten Folienelements (30) auf mindestens einen Teilbereich des Transponderinlays (10) umfasst und einen Schritt zum Aufbringen eines zweiten Folienelements (60) auf die Oberseite des Schaumstoffelements (20) mit dem ersten Teil der Streifenleiterantenne (11) umfasst.

12. Herstellungsverfahren nach Anspruch 11, wobei das erste Folienelement (30) ein laserbeschriftbares Folienelement ist und das zweite Folienelement (60) ein laserbeschriftbares Folienelement oder eine transparente Schutzfolie ist.

13. Herstellungsverfahren nach einem der Ansprüche 10 bis 12, das ferner einen Schritt zum Aufbringen einer Schutzfolie auf die Unterseite der Schaumstoffbahn (120) und den zweiten Teil der Streifenleiterantenne (11) umfasst.

14. Herstellungsverfahren nach einem der Ansprüche 10 bis 13, das ferner einen Schritt zum Ausstanzen einzelner Transponderetiketten aus der Schaumstoffbahn (120) mit mehreren aufgebrachten und umgeklappten Transponderinlays (10) umfasst.

15. Herstellungsverfahren nach einem der Ansprüche 10 bis 14, das ferner einen Schritt zum Aufwickeln einer Materialbahn aus der Schaumstoffbahn (120) mit mehreren aufgebrachten und umgeklappten Transponderinlays (10) umfasst.

## Claims

1. A transponder label (1), comprising
a dielectric foam element (20) having an upper side (21) and a lower side (22);
a transponder inlay (10) comprising a chip (12) and a strip conductor antenna (11);
an adhesive coating (40) for being able to affix the transponder label (1) on the lower side to a substrate,
wherein the transponder inlay (10) is applied to the foam element (20) by an adhesive (15) such that a first part of the strip conductor antenna (11) is located on the upper side (21) of the foam element (20) and a second part of the strip conductor antenna (11) is located on the lower side (22) of the foam element (20),
**characterized in that** the strip conductor antenna (11) has punched holes on the lower side (22) of the foam element (20) such that the strip conductor antenna (11) tears off during an attempt to remove the affixed transponder label (1) .

2. The transponder label according to claim 1, wherein the punched holes represent a perforation.

3. The transponder label according to claim 1 or 2,
wherein the foam element (20) has a maximum thickness of 1.5 millimeters.

4. The transponder label according to any of claims 1 to 3, further comprising a first foil element (30) covering at least a portion of the transponder inlay (10).

5. The transponder label according to claim 4, further comprising a second foil element (60) covering at least a portion of the first foil element (30).

6. The transponder label according to claim 5, wherein the first (30) or the second (60) foil element is a foil element that can be inscribed using a laser.

7. The transponder label according to any of claims 1 to 6, wherein the adhesive coating (40) covers at least a portion of the lower side (22) of the foam element (20) and of the second part of the strip conductor antenna (11).

8. The transponder label according to claim 4, wherein the first foil element (30) completely covers the strip conductor antenna (11) on the lower side (22) of the foam element (20) and wherein a region of the first foil element (30) which comes to rest on the lower side (22) is provided over its entire surface area with an adhesive coating (40).

9. The transponder label according to any of claims 1 to 8, further comprising an adhesive cover (50) covering the adhesive coating (40) on the lower side (22) of the foam element (20) and the second part of the strip conductor antenna (11).

10. A manufacturing process for at least one transponder label (1), comprising:
- providing a dielectric foam web (120) having an upper side and a lower side,
- providing a transponder inlay (10) comprising a chip (12) and a strip conductor antenna (11),
- applying the transponder inlay (10) to the foam web (120) in such a way that a first part of the strip conductor antenna (11) is located on the upper side of the foam web (120),
- folding down the transponder inlay (10) around the foam web (120) in such a way that a second part of the strip conductor antenna (11) comes to rest on the lower side of the foam web (120),
- connecting the strip conductor antenna (11) to the foam web (120) with an adhesive,
- providing the strip conductor antenna (11) with punched holes and
- applying an adhesive to the lower side of the foam web (120) and the second part of the strip conductor antenna (11) .

11. The manufacturing method according to claim 10, further comprising a step of applying a first foil element (30) to at least a portion of the transponder inlay (10) and a step of applying a second foil element (60) to the upper side of the foam element (20) comprising the first part of the strip conductor antenna (11).

12. The manufacturing method according to claim 11,
wherein the first foil element (30) is a foil element which can be inscribed using a laser and the second foil element (60) is a foil element which can be inscribed using a laser or a transparent protective foil.

13. The manufacturing method according to any of claims 10 to 12, further comprising a step of applying a protective foil to the lower side of the foam web (120) and the second part of the strip conductor antenna (11).

14. The manufacturing method according to any of claims 10 to 13, further comprising a step of punching out individual transponder labels from the foam web (120) having a plurality of applied and folded down transponder inlays (10) .

15. The manufacturing method according to any one of claims 10 to 14, further comprising a step of winding a web of material from the foam web (120) having a plurality of applied and folded down transponder inlays (10).

## Revendications

1. Étiquette à transpondeur (1), comprenant
un élément en mousse (20) diélectrique présentant une face supérieure (21) et une face inférieure (22) ;
un insert à transpondeur (10) comprenant une puce (12) et une antenne microruban (11) ;
un revêtement de colle (40) pour pouvoir coller l'étiquette à transpondeur (1) au niveau de la face inférieure sur un support,
sachant que l'insert à transpondeur (10) est appliqué par une colle (15) sur l'élément en mousse (20) de telle façon qu'une première partie de l'antenne microruban (11) se trouve sur la face supérieure (21) de l'élément en mousse (20) et une deuxième partie de l'antenne microruban (11) se trouve sur la face inférieure (22) de l'élément en mousse (20),
**caractérisée en ce que** l'antenne microruban (11) présente des découpes sur la face inférieure (22) de l'élément en mousse (20) de telle façon que l'antenne microruban (11) se déchire en cas de tentative de détachement de l'étiquette à transpondeur (1) collée.

2. Étiquette à transpondeur selon la revendication 1, sachant que les découpes sont une perforation.

3. Étiquette à transpondeur selon la revendication 1 ou 2, sachant que l'élément en mousse (20) présente une épaisseur de maximum 1,5 millimètre.

4. Étiquette à transpondeur selon l'une des revendications 1 à 3, comprenant en outre un premier élément en feuille (30) qui recouvre au moins une zone partielle de l'insert à transpondeur (10).

5. Étiquette à transpondeur selon la revendication 4, comprenant en outre un deuxième élément en feuille (60) qui couvre au moins une zone partielle du premier élément en feuille (30).

6. Étiquette à transpondeur selon la revendication 5, sachant que le premier (30) ou le deuxième (60) élément en feuille est un élément en feuille inscriptible avec un laser.

7. Étiquette à transpondeur selon l'une des revendications 1 à 6, sachant que le revêtement de colle (40) couvre au moins une zone partielle de la face inférieure (22) de l'élément en mousse (20) et de la deuxième partie de l'antenne microruban (11).

8. Étiquette à transpondeur selon la revendication 4, sachant que le premier élément en feuille (30) couvre entièrement l'antenne microruban (11) sur la face inférieure (22) de l'élément en mousse (20) et sachant qu'une zone du premier élément en feuille (30) qui vient reposer sur la face inférieure (22) est intégralement pourvue d'un revêtement de colle (40).

9. Étiquette à transpondeur selon l'une des revendications 1 à 8, comprenant en outre un recouvrement de colle (50) qui couvre le revêtement de colle (40) sur la face inférieure (22) de l'élément en mousse (20) et la deuxième partie de l'antenne microruban (11).

10. Procédé de fabrication d'au moins une étiquette à transpondeur (1), comprenant :
- la mise à disposition d'une bande de mousse (120) diélectrique présentant une face supérieure et une face inférieure,
- la mise à disposition d'un insert à transpondeur (10), comprenant une puce (12) et une antenne microruban (11),
- l'application de l'insert à transpondeur (10) sur la bande de mousse (120) de telle façon qu'une première partie de l'antenne microruban (11) se trouve sur la face supérieure de la bande de mousse (120),
- le rabattement de l'insert à transpondeur (10) autour de la bande de mousse (120) de telle façon qu'une deuxième partie de l'antenne microruban (11) vienne reposer sur la face inférieure de la bande de mousse (120),
- la liaison de l'antenne microruban (11) avec la bande de mousse (120) par une colle,
- le fait de doter l'antenne microruban (11) de découpes et
- l'application d'une colle sur la face inférieure de la bande de mousse (120) et la deuxième partie de l'antenne microruban (11).

11. Procédé de fabrication selon la revendication 10, qui comprend en outre une étape d'application d'un premier élément en feuille (30) sur au moins une zone partielle de l'insert à transpondeur (10) et comprend une étape d'application d'un deuxième élément en feuille (60) sur la face supérieure de l'élément en mousse (20) avec la première partie de l'antenne microruban (11).

12. Procédé de fabrication selon la revendication 11, sachant que le premier élément en feuille (30) est un élément en feuille inscriptible par laser et le deuxième élément en feuille (60) est un élément en feuille inscriptible par laser ou une feuille de protection transparente.

13. Procédé de fabrication selon l'une des revendications 10 à 12, qui comprend en outre une étape d'application d'une feuille de protection sur la face inférieure de la bande de mousse (120) et la deuxième partie de l'antenne microruban (11) .

14. Procédé de fabrication selon l'une des revendications 10 à 13, qui comprend en outre une étape de découpe d'étiquettes à transpondeur individuelles à partir de la bande de mousse (120) avec plusieurs inserts à transpondeur (10) appliqués et rabattus.

15. Procédé de fabrication selon l'une des revendications 10 à 14, qui comprend en outre une étape de déroulement d'une bande de matière à partir de la bande de mousse (120) avec plusieurs inserts à transpondeur (10) appliqués et rabattus.
